# EUROPÄISCHE PATENTSCHRIFT

(11) **EP 1 328 931 B1**
(45) Veröffentlichungstag und Bekanntmachung des Hinweises auf die Patenterteilung: **27.12.2006**
(21) Anmeldenummer: 01978197.0
(22) Anmeldetag: 01.10.2001
(51) Int. Cl.: G11B 7/09, G11B 21/10

(54) **VERFAHREN ZUR REGELUNG DER NACHFÜHRUNG EINER ABTASTVORRICHTUNG UND LAUFWERK DAFÜR**
METHOD FOR CONTROLLING THE TRACKING OF A SCANNING DEVICE AND A DRIVE THEREFOR
PROCEDE DE REGULATION DE LA POURSUITE D'UN DISPOSITIF DE BALAYAGE ET LECTEUR A CET EFFET

(30) Priorität: 04.10.2000 DE 10048920
(43) Veröffentlichungstag der Anmeldung: 23.07.2003
(73) Patentinhaber: ROBERT BOSCH GMBH, 70442 Stuttgart (DE)
(72) Erfinder: HERMANNS, Ingo, 31135 Hildesheim (DE)
(86) Internationale Anmeldenummer: PCT/DE2001/003748
(87) Internationale Veröffentlichungsnummer: WO 2002/029794

(56) Entgegenhaltungen:
- EP-A- 1 003 159
- EP-A- 1 152 410
- DE-A- 19 642 343
- JP-A- 8 030 997
- US-A- 4 682 314
- US-A- 5 682 307
- US-A- 5 831 949
- US-A- 5 867 461
- PATENT ABSTRACTS OF JAPAN vol. 1999, no. 11, 30. September 1999 (1999-09-30) -& JP 11 161958 A (PIONEER ELECTRON CORP), 18. Juni 1999 (1999-06-18) -& US 6 259 663 B1 (TATEISHI) 10. Juli 2001 (2001-07-10)

## Beschreibung

### Stand der Technik

Die Erfindung geht von einem Verfahren zur Regelung der Nachführung einer Abtastvorrichtung und von einem Laufwerk nach der Gattung der unabhängigen Ansprüche aus.

Aus der DE 196 42 343 ist ein Verfahren zum Regeln der Fokussierung eines zum Lesen von Daten auf einen rotierenden Aufzeichnungsträger gerichteten Lichtstrahls einer Abtastvorrichtung auf den Aufzeichnungsträger und der Führung des Lichtstrahls entlang den Datenspuren des Aufzeichnungsträgers durch jeweils einen Regelkreis bekannt. Dabei ist beispielsweise eine Spurregelschleife vorgesehen, die einen Leistungsverstärker enthält. Mit dem Leistungsverstärker ist ein Aktuator verbunden, der die Regelposition eines Objektivs eines Lesekopfes in der Spurebene mit einer Kraft F_{T} einstellt. Die Position des Objektivs in Bezug zu einer Compact-Disc wird durch auf dem Lesekopf montierte Referenzphotodioden gemessen. Durch Krafteinwirkung auf das Objektiv in Spurebene wird der Abstand Y₀ des Objektivs vom Lesekopf verändert. Eine durch die Änderung des Abstandes Y0 herbeigeführte Positionsstörung wird zusammen mit allen Positionsstörgrößen in Spurebene für die Bewegung des Objektivs in Bezug zur Compact-Disc an einem ersten Summationspunkt addiert. Daraus ergibt sich ein Gesamtpositionsfehler ΔY der Spurregelung in Spurebene. Ein Positionsaufnehmer wandelt den Gesamtpositionsfehler ΔY in das elektrische Positionsfehlersignal TE um. Dem Positonsfehlersignal TE werden an einem zweiten Summationspunkt parasitäre Signale E₁T überlagert, die von Defekten auf der Compact-Disc herrühren und die Positionsbestimmung in Spurebene stören. Das sich ergebende Signal V_{T} wird auf ein Korrekturnetzwerk der Spurregelung gegeben. Dabei handelt es sich um einen elektronischen Schaltkreis, dessen Funktion die eines Filters ist, und die die Stabilität und die statische und dynamische Genauigkeit der Regelung gewährleisten muß. Das Ausgangssignal des Korrekturnetzwerkes wird dann auf den Leistungsverstärker gegeben. Durch eine solche Regelschleife kann der Lesekopf auf eine bestimmte Spur auf der Oberfläche der Compact-Disc positioniert werden. Weiterhin können Ungenauigkeiten im Rundlauf, der Lagerung oder Fertigung von Baugruppen des Compact-Disc-Laufwerks ausgeglichen werden. Schließlich können durch externe Beschleunigungen, wie bspw. Vibrationen hervorgerufene Positionierungsfehler des Objektives in Bezug zur Compact-Disc ausgeglichen werden.

Bei der Abtastung optischer Speichermedien, bspw. durch einen Compact-Disc-Spieler, wird ein Laserstrahl mittels einer Abtastvorrichtung entlang einer Datenspur des optischen Speichermediums geführt. Die Elektronik der Abtastvorrichtung erhält dabei Informationen zur Positionsnachführung des Laserstrahls über entsprechende Regelkreise wie beschrieben. Voraussetzung für eine korrekte Ermittlung der aktuellen Position der Abtastvorrichtung ist dabei ein optisch einwandfreier Zustand des Speichermediums an dessen Oberfläche. Bei der Verwendung von auswechselbaren Speichermedien, wie beispielsweise Compact Discs, CD-Rom's, DVD's (Digital Versatile Disc) usw., deren Oberflächen gegenüber mechanischen Beschädigungen ungeschützt sind, ist die abzutastende Oberfläche des entsprechenden Speichermediums nicht immer in optisch einwandfreiem Zustand. Eine der Randbedingungen bei der Auslegung des entsprechenden Regelkreises ist daher immer die Optimierung der Abtastfähigkeit des Speichermediums bei beschädigter Oberfläche. Trifft nun der Laserstrahl auf eine beschädigte Stelle der Oberfläche des Speichermediums, so werden fehlerhafte Positionsdaten für die Position der Abtastvorrichtung an den Regelkreis geliefert. Der Regelkreis wiederum verarbeitet die fehlerhaften Positionsdaten zu fehlerhaften Korrektursignalen für die Nachführung der Abtastvorrichtung, wodurch eine Funktionsunterbrechung des Abtastvorgangs resultieren kann.

Bisher besteht eine Maßnahmen, die Abtastfähigkeit dahingehend zu verbessern, daß fehlerhafte Positionsdaten nicht zu einer fehlerhaften Nachführung der Abtastvorrichtung führen, darin, mit einem Sensor das Vorhandensein einer Beschädigung der Oberfläche des Speichermediums zu erkennen und für einen gewissen Zeitraum den Mittelwert der zuletzt ermittelten gültigen, d.h. fehlerfreien Werte der Positionsdaten für die Nachführung der Abtastvorrichtung zu verwenden und die während diesem Zeitraum eintreffenden fehlerhaften Positionsdaten zu ignorieren.

Diese Maßnahme wird jedoch in der Realität dadurch beeinträchtigt, daß der gesamte entsprechende Regelkreis eine Reihe von Energiespeichern oder bei digital ausgeführten Regeleinrichtungen Informationsspeicher aufweist, die ein Ein- und Nachschwingen bewirken, wenn die Eingangsgröße des entsprechenden Regelkreises beim Auftreten von Störungen, beispielsweise aufgrund von Oberflächenbeschädigungen des Speichermediums, bei der Nachführung der Abtastvorrichtung entlang der Datenspur abrupt geändert wird. Dieses Ein- und Nachschwingen beeinflußt das Korrektursignal des entsprechenden Regelkreises und führt zu einer unerwünschten Bewegung der Abtastvorrichtung.

Verfahren und Laufwerke gemäß der Oberbegriffe der Ansprüche 1 und 7 werden in EP 1003159, JP-8-030997 und US 5 867 461 offenbart.

### Vorteile der Erfindung

Das erfindungsgemäße Verfahren zur Regelung der Nachführung einer Abtastvorrichtung und das erfindungsgemäße Laufwerk dafür mit den Merkmalen der unabhängigen Ansprüche haben demgegenüber den Vorteil, daß durch mindestens einen Stördetektor Beschädigungen an einer abzutastenden Oberfläche des eingeführten Speichermediums detektiert werden und daß bei Detektion einer solchen Beschädigung eine Stellgröße des mindestens einen Aktuators zur Einstellung der Position der Abtastvorrichtung für eine erste vorgegebene Zeit auf einem vorgegebenen Wert gehalten wird. Auf diese Weise kann der Einfluß von Ein- und Nachschwingvorgängen von Energie- oder Informationsspeichern im entsprechenden Regelkreis auf die Nachführung der Abtastvorrichtung verhindert werden, so daß sich abrupte Änderungen der Eingangsgröße des entsprechenden Regelkreises beim Auftreten von Störungen, wie beispielsweise durch Beschädigung der Oberfläche des Speichermediums hervorgerufene fehlerhafte Positionsdaten für die aktuelle Position der Abtastvorrichtung, nicht mehr auf die Positionierung der Abtastvorrichtung durch den entsprechenden Regelkreis auswirken. Somit bleibt die Positioniergenauigkeit für die Abtastvorrichtung auch unter schwierigen Bedingungen erhalten, wodurch im Falle einer optischen Abtastvorrichtung auch das Auslesen kleinerer optischer Strukturen, wie beispielsweise DVD's ermöglicht wird.

Die Zuverlässigkeit für die Abtastung von Speichermedien mit beschädigter Oberfläche wird auf diese Weise nachhaltig verbessert.

Durch die in den Unteransprüchen aufgeführten Maßnahmen sind vorteilhafte Weiterbildungen und Verbesserungen des Verfahrens zur Regelung der Nachführung einer Abtastvorrichtung und des Laufwerks dafür gemäß den unabhängigen Ansprüchen möglich.

Besonders vorteilhaft ist es, daß von einem Positionsfehlersignal der Regelung, das aus einem Vergleich einer Ist-Position mit einer Soll-Position der Abtastvorrichtung hervorgeht, über eine zweite vorgegebene Zeit ein Mittelwert gebildet wird und daß bei Detektion einer Beschädigung durch den mindestens einen Stördetektor das Ansteuersignal des mindestens einen Aktuators für die erste vorgegebene Zeit vom gebildeten Mittelwert abgeleitet wird. Auf diese Weise ist sichergestellt, daß der Aktuator bei Detektion einer Beschädigung der Oberfläche des Speichermediums direkt und damit nicht unter Zwischenschaltung eines oder mehrerer Energie- oder Informationsspeicher durch einen vorgegebenen Wert angesteuert wird, wobei durch die Verwendung des Mittelwertes aus dem Positionsfehlersignal als vorgegebener Wert für die Ansteuerung ein Signal zur Verfügung steht, mit dem das für die erste vorgegebene Zeit bei fehlerfreier Ermittlung der Ist-Position der Abtastvorrichtung zu erwartende Ansteuersignal abgeschätzt werden kann. Somit wird gewährleistet, daß die Ansteuerung des Aktuators während der ersten vorgegebenen Zeit möglichst stark dem Ansteuersignal angenähert ist, das erzeugt worden wäre, wenn keine Beschädigung der Oberfläche des Speichermediums detektiert worden wäre.

Ein weiterer Vorteil besteht darin, daß bei Detektion einer Beschädigung durch den mindestens einen Stördetektor das Ansteuersignal des mindestens einen Aktuators für die erste vorgegebene Zeit auf einen vordefinierten Wert gesetzt wird. Auf diese Weise läßt sich ein beliebiger Wert für das Ansteuersignal für die erste vorgegebene Zeit nach den Bedürfnissen des Benutzers des Laufwerks vorgeben, wobei der für eine Mittelwertbildung erforderliche Schaltungsaufwand eingespart wird.

Erfindungsgemäß wird ein zumindest zeitweise vom Ausgangssignal mindestens eines für die Regelung eingesetzten Energie- oder Informationsspeichers abgeleitetes Signal bei Detektion einer Beschädigung durch den mindestens einen Stördetektor für die erste vorgegebene Zeit auf einem vorgegebenen Wert gehalten und der Regelung zugeführt. Auf diese Weise wird der Einfluß des Ein- und Nachschwingens der Energie- oder Informationsspeicher auf die Regelung bei abrupten Änderungen der Eingangsgröße des entsprechenden Regelkreises, beispielsweise aufgrund von durch Beschädigungen der Oberfläche des Speichermediums hervorgerufenen fehlerhaften Positionsdaten der Abtastvorrichtung, von vornherein unterdrückt.

Auch für die Ausgangssignale der Energie- oder Informationsspeicher des entsprechenden Regelkreises läßt sich anhand einer Mittelwertbildung über die zweite vorgegebene Zeit jeweils ein Schätzwert ermitteln, der dem tatsächlichen jeweiligen Ausgangssignal ohne Detektion einer Beschädigung möglichst nahe kommt.

Bei Verwendung eines vordefinierten Wertes für das der Regelung jeweils zugeführte Signal der Energie- oder Informationsspeicher kann wie beschrieben der Aufwand für eine Mittelwertbildung eingespart werden und das der Regelung jeweils zuzuführende Signal an die Bedürfnisse des Benutzers des Laufwerks angepaßt werden.

### Zeichnung

Ausführungsbeispiele der Erfindung sind in der Zeichnung dargestellt und in der nachfolgenden Beschreibung näher erläutert. Es zeigen Figur 1 ein Blockschaltbild eines Laufwerks gemäß einer ersten Ausführungsform, Figur 2 ein Blockschaltbild eines Laufwerks gemäß einer zweiten Ausführungsform, Figur 3 eine Filterstufe für ein erfindungsgemäßes Laufwerk gemäß einer ersten Ausführungsform und Figur 4 eine Filterstufe für ein erfindungsgemäßes Laufwerk gemäß einer zweiten Ausführungsform.

### Beschreibung der Ausführungsbeispiele

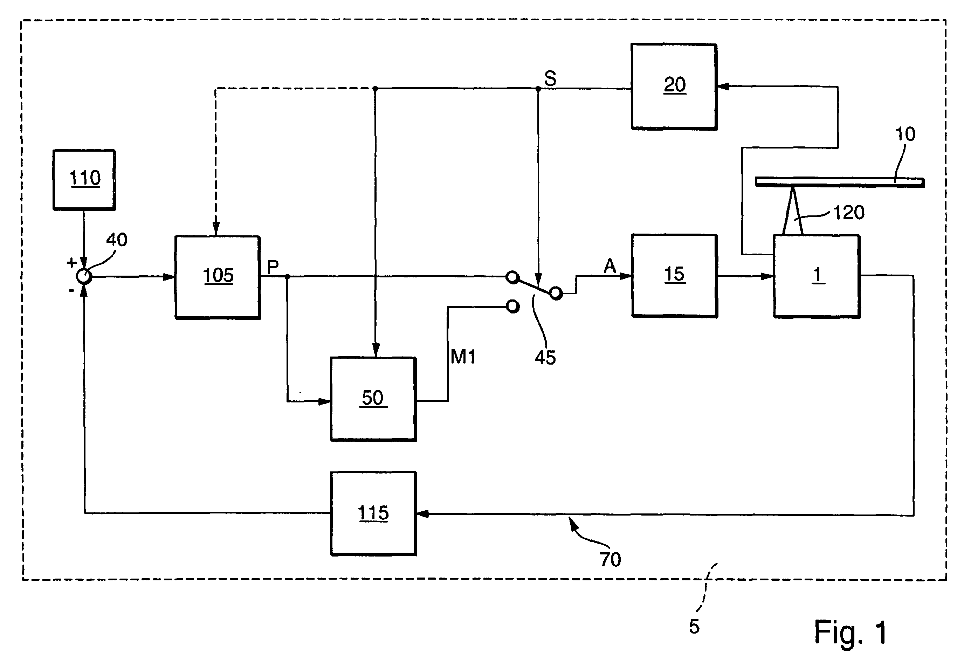

In Figur 1 kennzeichnet 5 ein Laufwerk für ein Speichermedium 10. Bei dem Speichermedium 10 kann es sich um ein optisches oder magnetisches Speichermedium handeln. Ist das Speichermedium 10 als optisches Speichermedium ausgebildet, kann es sich beispielsweise um eine Compact-Disc oder eine CD-ROM handeln. Das Laufwerk 5 umfaßt eine Abtastvorrichtung 1 zum Lesen und/oder Schreiben von Daten auf dem Speichermedium 10. Zum Abtasten von optischen Speichermedien kann dabei die Abtastvorrichtung 1 beispielsweise als optischer Schreib-/Lesekopf ausgebildet sein, der das Speichermedium 10 mittels eines Laserstrahls 120 abtastet, wobei das Speichermedium 10 als optisches Speichermedium ausgebildet ist, dessen Daten in sogenannten Datenspuren abgespeichert sind. Die Abtastvorrichtung 1 kann jedoch zum Abtasten von magnetischen Speichermedien 10 beispielsweise auch als magnetischer Schreib-/Lesekopf ausgebildet sein.

Durch Ungenauigkeiten im Rundlauf, der Lagerung oder Fertigung von Baugruppen des Laufwerks 5 und durch externe Beschleunigungen des Laufwerks 5, beispielsweise aufgrund von Vibrationen, wird die Position der Abtastvorrichtung 1 in Bezug auf das Speichermedium 10 beeinflußt, so daß es zu Fehlabtastungen kommt. Im folgenden sollen beispielhaft Fehlabtastungen aufgrund von Beschleunigungen des Laufwerks 5 betrachtet werden. Die Beschleunigungen können dabei in beliebiger Richtung auftreten. Bei einem plattenförmig ausgebildeten Speichermedium 10 können beispielsweise Beschleunigungen auftreten, deren Richtung in der Ebene des Speichermediums 10 liegen, sowie Beschleunigungen, deren Richtung senkrecht zur Ebene des Speichermediums 10 liegen. Im folgenden soll beispielhaft angenommen werden, daß die Daten auf einem solchen plattenförmigen Speichermedium 10 optisch gespeichert sind und daß die Abtastung des Speichermediums 10 durch die Abtastvorrichtung 1 zum Auslesen und/oder Beschreiben des Speichermediums 10 durch Fokussieren eines Laserstrahls 120 auf eine Spur des Speichermediums 10 erfolgt. Beschleunigungen, deren Richtung in der Ebene des Speichermediums 10 liegen, können dann zum Spurverlust während des Abtastvorgangs führen, wohingegen Beschleunigungen, deren Richtung senkrecht zur Ebene des Speichermediums 10 liegt, zu einer fehlerhaften Fokussierung der abgetasteten Spur des Speichermediums 10 durch die Abtastvorrichtung 1 führen können. Zur Rückgängigmachung des Spurverlusts kann eine Spurregelschleife verwendet werden, wohingegen zur Rückgängigmachung einer Fehlfokussierung eine Fokusregelschleife verwendet werden kann. Die Erfindung soll im folgenden beispielhaft anhand einer Fokusregelschleife 70 beschrieben werden, die durch Beschleunigungen senkrecht zur Ebene des Speichermediums 10 hervorgerufene Fehlfokussierungen auf dem Speichermedium 10 rückgängig machen soll, läßt sich jedoch in entsprechender Weise auf eine Spurregelschleife zur Rückgängigmachung von Spurverlusten durch externe Beschleunigungen übertragen.

Die Fokusregelschleife 70 ist dabei in Figur 1 in vereinfachter Form dargestellt und repräsentiert eine erste Ausführungsform in Bezug auf eine Regelung der Fokuseinstellung. Dabei wird die Position der Abtastvorrichtung 1 bezüglich des in das Laufwerk 5 eingeführten Speichermediums 10 von einem Positionssensor 115 gemessen, der zu diesem Zweck beispielsweise eine oder mehrere Photodioden umfassen kann, die beispielsweise auf der Abtastvorrichtung 1 montiert sein können. Der Positionssensor 115 ermittelt auf diese Weise den Abstand zwischen der Abtastvorrichtung 1 und dem Speichermedium 10 in Richtung senkrecht zur Ebene des Speichermediums 10. Der auf diese Weise gemessene Abstand stellt einen Ist-Wert dar. Entspricht der Abstand zwischen der Abtastvorrichtung 1 und dem Speichermedium 10 in Richtung senkrecht zur Ebene des Speichermediums 10 einem vorgegebenen Soll-Wert 110, so ist die Fokussierung einer Datenspur des Speichermediums 10 durch die Abtastvorrichtung 1 fehlerfrei. Durch die Fokusregelschleife 70 soll der gemessene Ist-Wert dem vorgegebenen Soll-Wert 110 nachgeführt werden, um eine möglichst fehlerfreie Fokussierung zu gewährleisten. Aufgrund von Vibrationen des Laufwerks 5, wie sie beispielsweise beim Betrieb in einem fahrenden Kraftfahrzeug auftreten, wird das Laufwerk 5 beschleunigt. Durch die unterschiedlichen Massen- und Federkonstanten des Speichermediums 10 und der Abtastvorrichtung 1 kommt es dabei zu einer Änderung des Abstandes der Abtastvorrichtung 1 vom Speichermedium 10 in Richtung senkrecht zur Ebene des Speichermediums 10, wenn eine Beschleunigung in dieser Richtung auf das Laufwerk 5 wirkt. Somit kommt es zu einer Abweichung des Ist-Wertes vom Soll-Wert 110. Der Positionssensor 115 leitet den ermittelten Ist-Wert in Form eines elektrischen Ist-Wert-Signals an eine Verknüpfungsvorrichtung 40 weiter. In der Verknüpfungsvorrichtung 40 wird das elektrische Ist-Wert-Signal von einem aus dem Sollwert 110 abgeleiteten elektrischen Soll-Wert-Signal subtrahiert. Das gebildete Differenzsignal stellt ein elektrisches Fokuspositionsfehlersignal dar und wird einer Filterstufe 105 zugeführt. Die Funktion der Filterstufe 105 besteht darin, daß es die Stabilität und die statische und dynamische Genauigkeit der Fokusregelung und gegebenenfalls eine ausreichende Schleifenverstärkung für die Fokusregelschleife 70 gewährleisten muß. Am Ausgang der Filterstufe 105 liegt dann ein entsprechend gefiltertes elektrisches Fokuspositionsfehlersignal P an, das über einen ersten steuerbaren Schalter 45 einem Aktuator 15 als Ansteuersignal A des Aktuators 15 zuführbar ist. Der Aktuator 15 ist mechanisch mit der Abtastvorrichtung 1 verbunden und leitet aus dem wie beschrieben aufbearbeiteten elektrischen Fokuspositionsfehlersignal eine Kraft in Richtung senkrecht zur Ebene des Speichermediums 10 ab, die der durch die Beschleunigung hervorgerufenen Abweichung des Ist-Wertes vom Soll-Wert 110 entgegenwirkt und die Abtastvorrichtung 1 so bewegt, daß der Abstand zwischen der Abtastvorrichtung 10 und dem Speichermedium 10 in Richtung senkrecht zur Ebene des Speichermediums 10 dem Soll-Wert 110 angepaßt wird.

Die Geschwindigkeit, mit der der Ist-Wert dem Soll-Wert 110 durch die Fokusregelschleife 70 nachgeführt wird, hängt von der Höhe der insgesamt in der Fokusregelschleife 70 vorliegenden Verstärkung ab, die auch als Schleifenverstärkung bezeichnet wird. Sie kann beispielsweise durch entsprechende Einstellung der Verstärkung der Filterstufe 105 verändert werden. Je höher die Schleifenverstärkung ist, desto schneller wird der Ist-Wert dem Soll-Wert 110 nachgeführt.

Oftmals weisen Speichermedien 10 an ihrer abzutastenden Oberfläche Beschädigungen auf, die eine Positionsmessung in Fokusrichtung senkrecht zur Ebene des Speichermediums 10 verfälschen und somit einen fehlerhaften Ist-Wert liefern. In diesem Fall wird ein entsprechend verfälschtes elektrisches Ist-Wert-Signal gebildet, das am Ausgang der Verknüpfungsvorrichtung 40 zu einem verfälschten elektrischen Fokuspositionsfehlersignal führt. Damit ist auch das dem Aktuator 15 von der Filterstufe 105 zuführbare gefilterte elektrische Fokuspositionsfehlersignal P verfälscht. Dies führt dann letztlich zu einer Fehlpositionierung der Abtastvorrichtung 1 und kann Funktionsstörungen beim Abtasten des Speichermediums 10 durch die Abtastvorrichtung 1 zur Folge haben. Solche Fehlpositionierungen der Abtastvorrichtung 1 werden durch eine hohe Schleifenverstärkung begünstigt, da diese eine schnelle Nachführung des gemessenen Ist-Wertes an den vorgegebenen Soll-Wert 110 gewährleistet, unabhängig davon, ob der gemessene Ist-Wert korrekt oder fehlerhaft ist.

Zur Einstellung der Position der Abtastvorrichtung 1 wandelt der Aktuator 15 das Ansteuersignal A wie beschrieben in eine Kraft in Richtung senkrecht zur Ebene des Speichermediums 10 um, die der durch die Beschleunigung hervorgerufenen Abweichung des Ist-Wertes vom Soll-Wert 110 entgegenwirkt und eine mechanische Stellgröße des Aktuators 15 darstellt. Das Laufwerk 5 umfaßt nun außerdem mindestens einen Stördetektor 20, der Beschädigungen an einer durch die Abtastvorrichtung 1 abzutastenden Oberfläche des in das Laufwerk 5 eingeführten Speichermediums 10 detektiert und dazu beispielsweise ebenfalls eine oder mehrere Fotodioden umfassen kann, die beispielsweise auf der Abtastvorrichtung 1 montiert sein können. Der Stördetektor 20 wandelt die ihm als Eingangsgröße von der Abtastvorrichtung 1 zugeführten detektierten Beschädigungen in ein Steuersignal S um, das der Fokusregelschleife 70 zugeführt wird und bewirkt, daß bei Detektion einer Beschädigung der abzutastenden Oberfläche des Speichermediums 10 die Stellgröße des Aktuators 15 zur Einstellung der Position der Abtastvorrichtung 1 für eine erste vorgegebene Zeit auf einem vorgegebenen Wert gehalten wird. Dazu kann der Stördetektor 20 das Steuersignal S der Fokusregelschleife 70 für die erste vorgegebene Zeit zuführen, wozu der Stördetektor 20 beispielsweise ein Zeitglied umfassen kann, das die Abgabe des Steuersignals S nach Ablauf der ersten vorgegebenen Zeit vom Zeitpunkt der Detektion der Beschädigungen an abbricht oder verändert.

Die Detektion von Beschädigungen an der abzutastenden Oberfläche des Speichermediums 10 bezieht sich bei den hier beschriebenen Ausführungsbeispielen immer auf Beschädigungen, die in der gerade von der Abtastvorrichtung 1 mittels des Laserstrahls 120 abgetasteten Stelle oder Spur der Oberfläche des Speichermediums 10 vorliegen, wobei der Stördetektor 20 beispielsweise mittels der beschriebenen Photodioden an der Abtastvorrichtung 1 die gerade von der Abtastvorrichtung 1 abgetastete Stelle oder Spur der Oberfläche des Speichermediums 10 auf Beschädigungen hin überprüft.

Im folgenden wird nun beispielhaft beschrieben, wie der Stördetektor 20 mittels des Störsignals S die Stellgröße des Aktuators 15 auf einem vorgegebenen Wert hält. Dies wird am einfachsten dadurch bewirkt, daß der Stördetektor 20 mittels des Steuersignals S den ersten steuerbaren Schalter 45 ansteuert, wobei der Stördetektor 20 bei Detektion einer Beschädigung den ersten steuerbaren Schalter 45 derart ansteuert, daß das Ansteuersignal A für die erste vorgegebene Zeit auf einen vorgegebenen Wert geschaltet wird. Da die Stellgröße des Aktuators 15 aus dessen Ansteuersignal A abgeleitet wird, ist auf diese Weise auch die Stellgröße für die erste vorgegebene Zeit auf einen vorgegebenen Wert eingestellt. Durch die auf diese Weise realisierbare direkte Beeinflussung des Ansteuersignals A des Aktuators 15 durch den Stördetektor 20 kann verhindert werden, daß Ein- und Nachschwingvorgänge von in der Fokusregelschleife 70 angeordneten Energie- und/oder Informationsspeichern, die sich aufgrund von fehlerhaften Positionsbestimmungen der Abtastvorrichtung 1 durch den Positionssensor 115 bei Auftreten von Beschädigungen an der abzutastenden Oberfläche des Speichermediums 10 wie beschrieben ergeben, auf das Ansteuersignal A und damit auf die Nachführung der Abtastvorrichtung 1 störend auswirken.

Dabei ist in Figur 1 eine erste Ausführungsform dargestellt, bei der das gefilterte elektrische Fokuspositionsfehlersignal P einem ersten Mittelwertbildner 50 zugeführt ist, der vom gefilterten elektrischen Fokuspositionsfehlersignal P über eine zweite vorgegebene Zeit einen ersten Mittelwert M1 bildet. Der erste Mittelwert M1 wird dabei permanent aktualisiert, so daß bei Detektion von Beschädigungen durch den Stördetektor 20 am Ausgang des ersten Mittelwertbildners 50 der über die zurückliegende zweite vorgegebene Zeit gebildete erste Mittelwert M1 des gefilterten elektrischen Fokuspositionsfehlersignals P anliegt. Die zweite vorgegebene Zeit kann dabei durch ein entsprechendes Zeitglied im ersten Mittelwertbildner 50 eingestellt sein. Durch den ersten steuerbaren Schalter 45 ist nun entweder das gefilterte elektrische Fokuspositionsfehlersignal P direkt oder der erste Mittelwert M1 als Ausgangssignal des ersten Mittelwertbildners 50 dem Aktuator 15 als Ansteuersignal A zuführbar, wobei der Stördetektor 20 bei Detektion einer Beschädigung an der abzutastenden Oberfläche des Speichermediums 10 den ersten Schalter 45 so ansteuert, daß das Ausgangssignal M1 des ersten Mittelwertbildners 50 für die erste vorgegebene Zeit als Ansteuersignal A dem Aktuator 15 zugeführt wird. Durch das Steuersignal S wird dabei auch der erste Mittelwertbildner 50 angesteuert und zwar derart, daß bei Detektion von Beschädigungen an der abzutastenden Oberfläche des Speichermediums 10 die Mittelwertbildung abgebrochen wird und für die erste vorgegebene Zeit der zuletzt berechnete erste Mittelwert M1 als Ausgangssignal abgegeben wird. Auf diese Weise wird verhindert, daß während der ersten vorgegebenen Zeit neue Mittelwerte des gefilterten elektrischen Fokuspositionsfehlersignals P gebildet werden, die auf Ein- und Nachschwingvorgängen von Energie- oder Informationsspeichern speichern in der Fokusregelschleife 70 beruhen könnten und somit nicht zum gewünschten Effekt des Einfrierens der Stellgröße des Aktuators 15 für die erste vorgegebene Zeit führen würden. Nach Ablauf der ersten vorgegebenen Zeit veranlaßt der Stördetektor 20 mittels des Steuersignals S wieder die Umschaltung des ersten Schalters 45 zur direkten Zuführung des gefilterten elektrischen Fokuspositionsfehlersignals P als Ansteuersignal A an den Aktuator 15 sowie die Wiederaufnahme der Mittelwertbildung durch den ersten Mittelwertbildner 50 aus dem gefilterten elektrischen Fokuspositionsfehlersignal P.

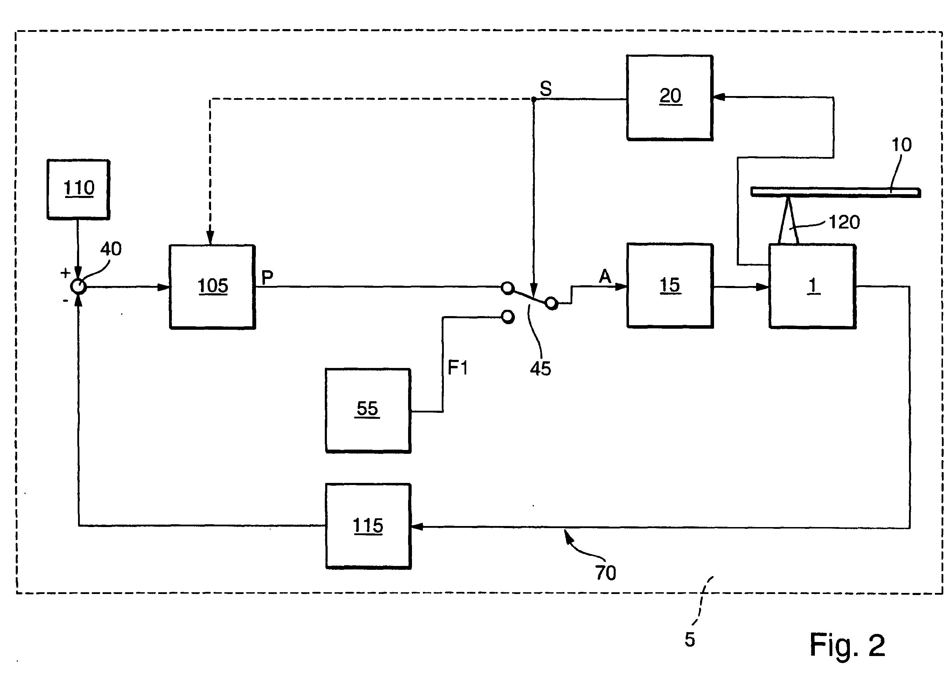

Gemäß Figur 2 ist eine zweite Ausführungsform dargestellt, die wie die erste Ausführungsform gemäß Figur 1 aufgebaut ist, wobei gleiche Bezugszeichen gleiche Elemente kennzeichnen und wobei im Unterschied zur ersten Ausführungsform das Laufwerk 5 anstelle des ersten Mittelwertbildners 50 einen ersten Festwertspeicher 55 umfaßt, der als Ausgangssignal einen ersten Festwert F1 abgibt. Durch den ersten Schalter 45 ist dann entweder das gefilterte elektrische Fokuspositionsfehlersignal P direkt oder das Ausgangssignal F1 des ersten Festwertspeichers 55 dem Aktuator 15 als Ansteuersignal A zuführbar. Der erste Festwert F1 kann dabei beispielsweise vom Benutzer des Laufwerks 5 mittels einer in Figur 2 nicht dargestellten Eingabevorrichtung vorgegeben oder standardmäßig eingestellt sein. Bei Detektion einer Beschädigung an der abzutastenden Oberfläche des Speichermediums 10 veranlaßt dann der Stördetektor 20 mittels des Steuersignals S den ersten Schalter 45 dazu, das Ausgangssignal F1 des ersten Festwertspeichers 55 für die erste vorgegebene Zeit dem Aktuator 15 als Ansteuersignal A zuzuführen. Eine Ansteuerung des ersten Festwertspeichers 55 durch das Steuersignal S kann dabei entfallen, da der erste Festwert F1 unabhängig von der Fokusregelschleife 70 und damit von den in der Fokusregelschleife 70 vorhandenen Energie- oder Informationsspeichern abgelegt ist. Der erste Festwertspeicher 55 hat keine Verbindung zum gefilterten elektrischen Fokuspositionsfehlersignal P.

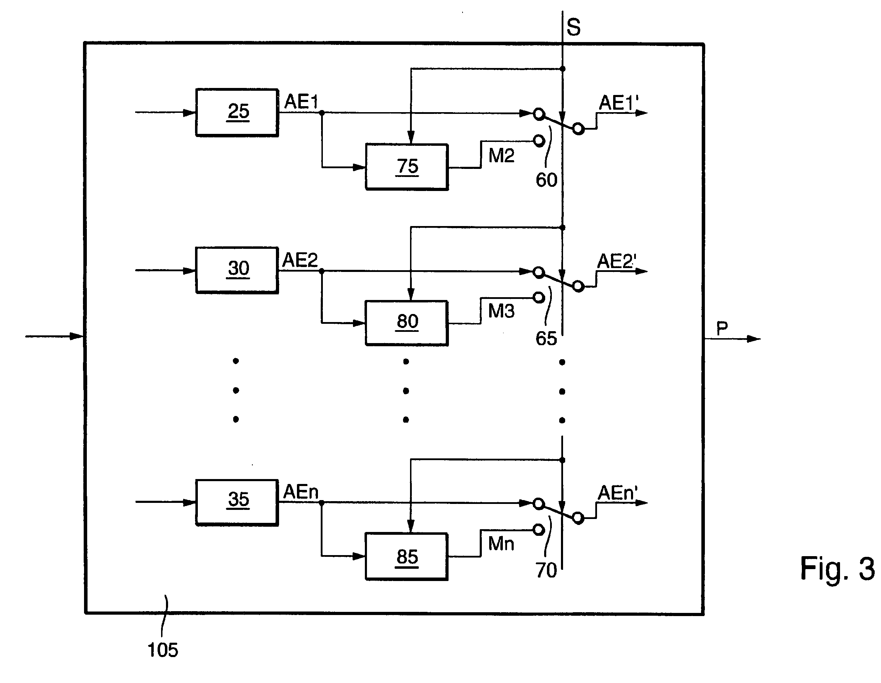

Erfindungsgemäß ist es vorgesehen, das Steuersignal S des Stördetektors 20 der Filterstufe 105 zuzuführen, die gemäß Figur 3 n Energie- oder Informationsspeicher 25, 30, 35 stellvertretend für sämtliche in der Fokusregelschleife 70 vorliegende Energie- oder Informationsspeicher umfassen soll. Die Energie- oder Informationsspeicher der Filterstufe 105 dienen dabei dazu, die Stabilität und die statische und dynamische Genauigkeit der Fokusregelung zu gewährleisten. Dabei kann das Ausgangssignal AE1 eines ersten Energie- oder Informationsspeichers 25 über einen zweiten steuerbaren Schalter 60 als ein erstes Weiterleitungssignal AE1' weiterführenden Schaltungen der Filterstufe 105 bzw. der Fokusregelschleife 70 zugeführt werden. Mittels des Steuersignals S kann nun der Stördetektor 20 bei Detektion einer Beschädigung der abzutastenden Oberfläche des Speichermediums 10 den zweiten steuerbaren Schalter 60 so ansteuern, daß das erste Weiterleitungssignal AE1' des ersten Energie- oder Informationsspeichers 25 für die erste vorgegebene Zeit auf einen vorgegebenen Wert geschaltet wird. Dies kann gemäß einer ersten Ausführungsform nach Figur 3 dadurch erfolgen, daß ein zweiter Mittelwertbildner 75 vorgesehen ist, dem das Ausgangssignal AE1 des ersten Energie- oder Informationsspeichers 25 zur Mittelwertbildung über beispielsweise ebenfalls die zweite vorgegebene Zeit zugeführt ist. Die Einstellung der zweiten vorgegebenen Zeit kann dabei wie beschrieben im zweiten Mittelwertbildner 75 durch ein entsprechendes Zeitglied realisiert werden. Der zweite Mittelwertbildner 75 gibt dann als Ausgangssignal den gebildeten Mittelwert als zweiten Mittelwert M2 ab. Die Mittelwertbildung im zweiten Mittelwertbildner 75 erfolgt dabei in der für den ersten Mittelwertbildner 50 beschriebenen Weise. In entsprechender Weise ist der zweite Mittelwertbildner 75 auch vom Steuersignal S des Stördetektors 20 angesteuert. Durch den zweiten steuerbaren Schalter 60 kann nun entweder das Ausgangssignal AE1 des ersten Energie- oder Informationsspeichers 25 direkt oder das Ausgangssignal M2 des zweiten Mittelwertbildners 75 als erstes Weiterleitungssignal AE1' der Fokusregelschleife 70 oder weiterführenden Schaltungen der Filterstufe 105 zugeführt werden. Bei Detektion einer Beschädigung an der abzutastenden Oberfläche des Speichermediums 10 steuert der Stördetektor 20 mittels des Steuersignals S den zweiten Schalter 65 so an, daß das Ausgangssignal M2 des zweiten Mittelwertbildners 75 für die erste vorgegebene Zeit als erstes Weiterleitungssignal AE1' weiterführenden Schaltungen der Filterstufe 105 oder der Fokusregelschleife 70 direkt zugeführt wird. Für diese erste vorgegebene Zeit wird dabei wie bereits für den ersten Mittelwertbildner 50 beschrieben die Mittelwertbildung durch das Steuersignal S im zweiten Mittelwertbildner 75 verhindert, so daß der bei Detektion der Beschädigungen zuletzt gebildete zweite Mittelwert M2 für die erste vorgegebene Zeit als erstes Weiterleitungssignal AE1' verwendet wird. Werden keine Beschädigungen an der abzutastenden Oberfläche des Speichermediums 10 detektiert, so steuert der Stördetektor 20 mittels des Steuersignals S den zweiten Schalter 60 derart an, daß das Ausgangssignal AE1 des ersten Energie- oder Informationsspeichers 25 als erstes Weiterleitungssignal AE1' weiterführenden Schaltungen der Filterstufe 105 oder der Fokusregelschleife 70 zugeführt wird.

Entsprechendes gilt für sämtliche der n Energie- oder Informationsspeicher 25, 30, 35, die die Filterstufe 105 umfaßt. So ist das Ausgangssignal AE2 eines zweiten Energie- oder Informationsspeichers 20 einerseits direkt über einen dritten steuerbaren Schalter 65 als ein zweites Weiterleitungssignal AE2' weiterführenden Schaltungen der Filterstufe 105 oder der Fokusregelschleife 70 zuführbar. Andererseits ist das Ausgangssignal AE2 des zweiten Energie- oder Informationsspeichers 30 einem dritten Mittelwertbildner 80 zuführbar, der beispielsweise über die zweite vorgegebene Zeit einen dritten Mittelwert M3 des Ausgangssignals AE2 des zweiten Energie- oder Informationsspeichers 30 bildet und diesen als Ausgangssignal ebenfalls dem dritten Schalter 65 zuführt. Der dritte Mittelwertbildner 80 und der dritte steuerbare Schalter 65 sind in entsprechender Weise über das Steuersignal S des Stördetektors 20 angesteuert, so daß bei Detektion einer Beschädigung der Stördetektor 20 den dritten Schalter 65 so ansteuert, daß das Ausgangssignal M3 des dritten Mittelwertbildners 80 für die erste vorgegebene Zeit als zweites Weiterleitungssignal AE2' weiterführenden Schaltungen der Filterstufe 105 oder der Fokusregelschleife 70 zugeführt und die Mittelwertbildung für die erste vorgegebene Zeit im dritten Mittelwertbildner 80 verhindert wird. Entsprechendes gilt für einen n-ten Energie- oder Informationsspeicher 35, dessen Ausgangssignal AEn über einen n-ten steuerbaren Schalter 70 als n-tes Weiterleitungssignal AEn' weiterführenden Schaltungen der Filterstufe 105 oder der Fokusregelschleife 70 zuführbar ist. Das Ausgangssignal AEn des n-ten Energie- oder Informationsspeichers 35 ist außerdem in der beschriebenen Weise einem n-ten Mittelwertbildner 85 zugeführt, der beispielsweise über die zweite vorgegebene Zeit einen n-ten Mittelwert Mn des Ausgangssignal AEn des n-ten Energie- oder Informationsspeichers 35 bildet und als Ausgangssignal dem n-ten Schalter 70 zuführt. Der n-te Schalter 70 und der n-te Mittelwertbildner 85 sind ebenfalls durch das Steuersignal S des Stördetektors 20 angesteuert. In entsprechender Weise wird bei Detektion einer Beschädigung der abzutastenden Oberfläche des Speichermediums 10 der n-te Schalter 70 vom Stördetektor 20 mittels des Steuersignals S so angesteuert, daß das Ausgangssignal Mn des n-ten Mittelwertbildners 85 für die erste vorgegebene Zeit als n-tes Weiterleitungssignal AEn' weiterführenden Schaltungen der Filterstufe 105 oder der Fokusregelschleife 70 zugeführt und die Mittelwertbildung für die erste vorgegebene Zeit im n-ten Mittelwertbildner 85 verhindert wird. Sowohl der n-te Schalter als auch der n-te Mittelwertbildner 85 sind in der für die anderen Energie- oder Informationsspeicher 25, 30 beschriebenen Weise durch das Steuersignal S angesteuert. n ist im vorliegenden Beispiel gleich 3 gewählt, kann jedoch ganz allgemein nach Bedarf >= 1 gewählt werden.

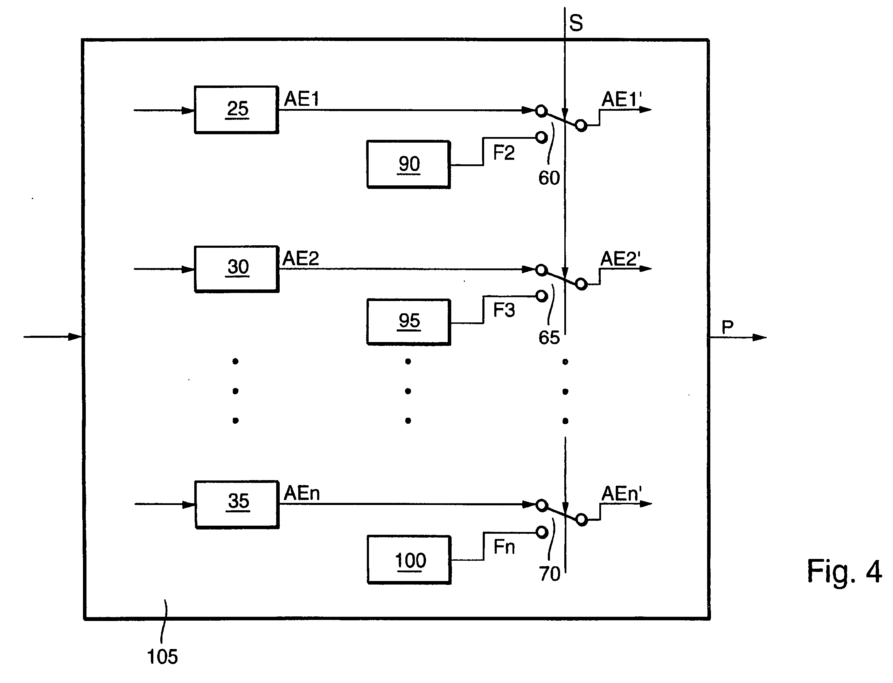

Figur 4 zeigt die Filterstufe 105 in einer zweiten Ausführungsform, die wie die erste Ausführungsform nach Figur 3 aufgebaut ist. In Figur 4 kennzeichnen gleiche Bezugszeichen gleiche Elemente wie in Figur 3. Im Unterschied zur ersten Ausführungsform nach Figur 3 ist jedoch bei der zweiten Ausführungsform nach Figur 4 der zweite Mittelwertbildner 75 durch einen zweiten Festwertspeicher 90, der dritte Mittelwertbildner 80 durch einen dritten Festwertspeicher 95 und der n-te Mittelwertbildner 85 durch einen n-ten Festwertspeicher 100 ersetzt. Die Festwertspeicher 90, 95, 100 der Filterstufe 105 werden dabei nicht mehr durch das Steuersignal S des Stördetektors 20 angesteuert. Sie haben auch keine Verbindung zum Ausgangssignal AE1, AE2, AEn des jeweils zugehörigen Energie- oder Informationsspeichers 25, 30, 35. Vielmehr ist in den Festwertspeichern 90, 95, 100 der Filterstufe 105 entsprechend dem ersten Festwertspeicher 55 gemäß Figur 2 jeweils ein Festwert F2, F3, Fn gespeichert, wobei der jeweilige Festwert F2, F3, Fn beispielsweise vom Benutzer des Laufwerks 5 an einer in den Figuren nicht dargestellten Eingabevorrichtung des Laufwerks 5 eingegeben und vorgegeben oder standardmäßig eingestellt sein kann. So liefert der zweite Festwertspeicher 90 als Ausgangssignal einen zweiten Festwert F2. Der dritte Festwertspeicher 95 liefert als Ausgangssignal einen dritten Festwert F3 und der n-te Festwertspeicher 100 liefert als Ausgangssignal einen n-ten Festwert Fn. Da die Festwerte F2, F3, Fn und die Festwertspeicher 90, 95, 100 der Filterstufe 105 unabhängig vom jeweiligen Ausgangssignal AE1, AE2, AEn der Energie- oder Informationsspeicher 25, 30, 35 sind, kann auf eine Ansteuerung durch den Stördetektor 20 für die Festwertspeicher 90, 95, 100 der Filterstufe 105 wie bereits für den ersten Festwertspeicher 55 beschrieben verzichtet werden. Durch den zweiten Schalter 60 wird dann entweder das Ausgangssignal AE1 des ersten Energie- oder Informationsspeichers 25 direkt oder das Ausgangssignal F2 des zweiten Festwertspeichers 90 als erstes Weiterleitungssignal AE1' den weiterführenden Schaltungen der Filterstufe 105 oder des Fokusregelkreises 70 zugeführt. Bei Detektion einer Beschädigung an der Oberfläche des Speichermediums 10 durch den Stördetektor 20 wird der zweite Schalter 60 durch das Steuersignal S so angesteuert, daß das Ausgangssignal F2 des zweiten Festwertspeichers 90 für die erste vorgegebene Zeit den weiterführenden Schaltungen der Filterstufe 105 oder der Fokusregelschleife 70 zugeführt wird. Ansonsten steuert der Stördetektor 20 mittels des Steuersignals S den zweiten Schalter 60 so an, daß das Ausgangssignal AE1 des ersten Energie- oder Informationsspeichers 25 direkt als erstes Weiterleitungssignal AE1' den weiterführenden Schaltungen der Filterstufe 105 oder der Fokusregelschleife 70 zugeführt wird. Entsprechend ist durch den dritten steuerbaren Schalter 65 entweder das Ausgangssignal AE2 des zweiten Energie- oder Informationsspeichers 30 direkt oder das Ausgangssignal F3 des dritten Festwertspeichers 95 als zweites Weiterleitungssignal AE2' weiterführenden Schaltungen der Filterstufe 105 oder der Fokusregelschleife 70 zuführbar, wobei bei Detektion einer Beschädigung der Stördetektor 20 mittel dem Steuersignal S den dritten Schalter 65 so ansteuert, daß das Ausgangssignal F3 des dritten Festwertspeichers 95 für die erste vorgegebene Zeit den weiterführenden Schaltungen der Filterstufe 105 oder der Fokusregelschleife 70 zugeführt wird und ansonsten das Ausgangssignal AE2 des zweiten Energie- oder Informationsspeichers 30 direkt als zweites Weiterleitungssignal AE2' den weiterführenden Schaltungen der Filterstufe 105 oder der Fokusregelschleife 70 zugeführt wird. In entsprechender Weise ist durch den n-ten steuerbaren Schalter 70 entweder das Ausgangssignal AEn des n-ten Energie- oder Informationsspeichers 35 direkt oder das Ausgangssignal Fn des n-ten Festwertspeichers 100 den weiterführenden Schaltungen der Filterstufe 105 oder der Fokusregelschleife 70 zuführbar, wobei bei Detektion einer Beschädigung an der abzutastenden Oberfläche des Speichermediums 10 der Stördetektor 20 mittels des Steuersignals S den n-ten Schalter 70 so ansteuert, daß das Ausgangssignal Fn des n-ten Festwertspeichers 100 für die erste vorgegebene Zeit den weiterführenden Schaltungen der Filterstufe 105 oder der Fokusregelschleife 70 zugeführt wird, wobei ansonsten das Ausgangssignal AEn des n-ten Energie- oder Informationsspeichers 35 direkt als n-tes Weiterleitungssignal AEn' den weiterführenden Schaltungen der Filterstufe 105 oder der Fokusregelschleife 70 zugeführt wird.

Es kann nun vorgesehen sein, bei Detektion von Beschädigungen an der abzutastenden Oberfläche des Speichermediums 10 sowohl das Ansteuersignal A als auch die Weiterleitungssignale AE1', AE2', AEn' für die erste vorgegebene Zeit durch Ansteuerung des Stördetektors 20 mittels dem Steuersignal S jeweils auf einem vorgegebenen Wert durch Mittelwertbildung oder Festwertspeicher wie beschrieben zu halten. Es kann jedoch auch vorgesehen sein, nur das Ansteuersignal A oder nur die Weiterleitungssignale AE1', AE2', AEn' bei Detektion von Beschädigungen an der abzutastenden Oberfläche des Speichermediums 10 für die erste vorgegebene Zeit auf einem entsprechend vorgegebenen Wert zu halten, beispielsweise durch Mittelwertbildung oder Festwertspeicher wie beschrieben.

Die Erfindung wurde beispielhaft anhand einer Fokusregelschleife beschrieben. In entsprechender Weise lassen sich jedoch auch andere Regelschleifen zur Nachführung einer Abtastvorrichtung von einer aktuell gemessenen Position zu einer vorgegebenen Position realisieren, beispielsweise eine Spurregelschleife. Für jede der vorgesehenen Regelschleifen kann ein Stördetektor vorgesehen sein, der Beschädigungen an einer abzutastenden Oberfläche des in das Laufwerk 5 eingeführten Speichermediums 10 detektiert, wenn diese Beschädigungen Auswirkungen auf die Nachführung der Abtastvorrichtung in der durch die entsprechende Regelschleife realisierten Regelungsrichtung haben. Entsprechend weist jede dieser Regelschleifen einen Aktuator auf, der eine Nachführung der Abtastvorrichtung in der durch die entsprechende Regelschleife realisierten Regelungsrichtung bewirkt.

Die erste und/oder die zweite vorgegebene Zeit können ebenfalls durch Benutzervorgabe an einer in den Figuren nicht dargestellten Eingabevorrichtung vorgegeben oder standardmäßig eingestellt sein.

## Patentansprüche

1. Verfahren zur Regelung der Nachführung einer Abtastvorrichtung (1), insbesondere eines Schreib-/Lesekopfes, eines Laufwerkes (5) für Speichermedien (10), wobei eine gemessene Position der Abtastvorrichtung (1) bezüglich eines in das Laufwerk (5) eingeführten Speichermediums (10) mit einer vorgegebenen Position verglichen wird und wobei in Abhängigkeit des Vergleichsergebnisses mindestens ein Aktuator (15) so angesteuert wird, dass die Abtastvorrichtung (1) in Richtung der vorgegebenen Position bewegt wird, wobei durch mindestens einen Stördetektor (20) Beschädigungen an einer abzutastenden Oberfläche des eingeführten Speichermediums (10) detektiert werden und dass bei Detektion einer solchen Beschädigung eine Stellgröße des mindestens einen Aktuators (15) zur Einstellung der Position der Abtastvorrichtung (1) für eine erste vorgegebene Zeit auf einem vorgegebenen Wert gehalten wird, **dadurch gekennzeichnet, dass** ferner ein zumindest zeitweise vom Ausgangssignal (AE1, AE2, AEn) mindestens eines für die Regelung eingesetzten Energie- oder Informationsspeichers (25,30,35) einer Fitterstufe (105) abgeleitetes Signal (AE1', AE2', AEn') bei Detektion einer Beschädigung durch den mindestens einen Stördetektor (20) für die erste vorgegebene Zeit auf einem vorgegebenen Wert (M2, M3, Mn; F2, F3, Fn) gehalten und der Regelung zugeführt wird.

2. Verfahren nach Anspruch 1, **dadurch gekennzeichnet, dass** ein Ansteuersignal (A) des mindestens einen Aktuators (15) bei Detektion einer Beschädigung durch den mindestens einen Stördetektor (20) für die erste vorgegebene Zeit auf einem vorgegebenen Wert (M1; F1) gehalten wird.

3. Verfahren nach Anspruch 2, **dadurch gekennzeichnet, dass** von einem Positionsfehlersignal (P) der Regelung, das aus einem Vergleich einer Ist-Position mit einer Soll-Position der Abtastvorrichtung (1) hervorgeht, über eine zweite vorgegebene Zeit ein Mittelwert (M1) gebildet wird und dass bei Detektion einer Beschädigung durch den mindestens einen Stördetektor (20) das Ansteuersignal (A) für die erste vorgegebene Zeit vom gebildeten Mittelwert (M1) abgeleitet wird.

4. Verfahren nach Anspruch 2, **dadurch gekennzeichnet, dass** bei Detektion einer Beschädigung durch den mindestens einen Stördetektor (20) das Ansteuersignal (A) für die erste vorgegebene Zeit auf einen vordefinierten Wert (F1) gesetzt wird.

5. Verfahren nach Anspruch 1, **dadurch gekennzeichnet, dass** vom Ausgangssignal (AE1, AE2, AEn) des mindestens einen Energie- oder Informationsspeichers (25, 30, 35) über eine zweite vorgegebene Zeit ein Mittelwert (M2, M3, Mn) gebildet wird und dass bei Detektion einer Beschädigung durch den mindestens einen Stördetektor (20) das vom Ausgangssignal (AB1, AE2, AEn) zumindest zeitweise abgeleitete Signal (AE1', AE2', AEn') für die erste vorgegebene Zeit vom gebildeten Mittelwert (M2, M3, Mn) abgeleitet wird.

6. Verfahren nach Anspruch 1, **dadurch gekennzeichnet, dass** das vom Ausgangssignal (AE1, AE2, AEn) des mindestens einen Energie- oder Informationsspeichers (25, 30, 35) zumindest zeitweise abgeleitete Signal (AE1', AE2', AEn') bei Detektion einer Beschädigung durch den mindestens einen Stördetektor (20) für die erste vorgegebene Zeit auf einen vordefinierten Wert (F2, F3, Fn) gesetzt wird.

7. Laufwerk (5) für Speichermedien (10) mit einer Abtastvorrichtung (1), insbesondere einem Schreib-/Lesekopf, zur Abtastung eines in das Laufwerk (5) eingelegten Speichermediums (10), mit mindestens einem Positionssensor (50) zum Messen einer Position der Abtastvorrichtung (1) bezüglich des in das Laufwerk (5) eingeführten Speichermediums (10), mit einer Vergleichsvorrichtung (40) zum Vergleich der gemessenen Position mit einer vorgegebenen Position und mit mindestens einem Aktuator (15), der von der Vergleichsvorrichtung (40) in Abhängigkeit des Vergleichsergebnisses so angesteuert wird, dass die Abtastvorrichtung (1) in Richtung der vorgegebenen Position bewegt wird, mit mindestens ein Stördetektor (20) zur Detektion von Beschädigungen an einer abzutastenden Oberfläche des eingeführten Speichermediums (10) vorgesehen ist, dass der Stördetektor (20) bei Detektion einer solchen Beschädigung den mindestens einen Aktuator (15) so ansteuert, dass eine Stellgröße des mindestens einen Aktuators (15) zur Einstellung der Position der Abtastvorrichtung (1) für eine erste vorgegebene Zeit auf einem vorgegebenen Wert gehalten wird, **dadurch gekennzeichnet, dass** ferner mindestens ein für die Regelung eingesetzter Energie- oder Informationsspeicher (25, 30, 35) einer Fitterstufe (105) vorgesehen ist, dass mindestens ein zweiter steuerbarer Schalter (60, 65, 70) vorgesehen ist zur Umschaltung eines von einem Ausgangssignal (AE1, AE2, AEn) des mindestens einen Energie- oder Informationsspeichers (25, 30, 35) zumindest zeitweise abgeleiteten Signals (AE1', AE2', AEn') und dass der mindestens eine Stördetektor (20) bei Detektion einer Beschädigung den zweiten Schalter (60, 65, 70) derart ansteuert, dass das vom Ausgangssignal (AE1, AE2, AEn) des mindestens einen Energie- oder Informationsspeicher (25, 30, 35) zumindest zeitweise abgeleitete Signal (AE1', AE2', AEn') für die erste vorgegebene Zeit auf einen vorgegebenen Wert (M2, M3, Mn; F2, F3, Fn) geschaltet wird.

8. Laufwerk (5) nach Anspruch 7, **dadurch gekennzeichnet, dass** ein erster steuerbarer Schalter (45) zur Umschaltung eines Ansteuersignals (A) des mindestens einen Aktuators (15) vorgesehen ist und dass der mindestens eine Stördetektor (20) bei Detektion einer Beschädigung den ersten Schalter (45) derart ansteuert, dass das Ansteuersignal (A) für die erste vorgegebene Zeit auf einen vorgegebenen Wert geschaltet wird.

9. Laufwerk (5) nach Anspruch 8, **dadurch gekennzeichnet, dass** ein erster Mittelwertbildner (50) vorgesehen ist, der von einem Positionsfehlersignal (P) der Regelung, das aus einem Vergleich einer Ist-Position mit einer Soll-Position der Abtastvorrichtung (1) hervorgeht, über eine zweite vorgegebene Zeit einen Mittelwert (M1) bildet, dass durch den ersten Schalter (45) entweder das Positionsfehlersignal (P) direkt oder ein Ausgangssignal des ersten Mittelwertbildners (50) dem mindestens einen Aktuator (15) zuführbar ist und dass bei Detektion einer Beschädigung der mindestens eine Stördetektor (20) den ersten Schalter (45) so ansteuert, dass das Ausgangssignal (M1) des ersten Mittelwertbildners (50) für die erste vorgegebene Zeit dem Aktuator (15) zugeführt wird.

10. Laufwerk (5) nach Anspruch 8, **dadurch gekennzeichnet, dass** ein erster Festwertspeicher (55) vorgesehen ist, der ein vordefiniertes Ausgangssignal (F1) liefert, dass durch den ersten Schalter (45) entweder das Positionsfehlersignal (P) direkt oder das Ausgangssignal (F1) des ersten Festwertspeichers (55) dem mindestens einen Aktuator (15) zuführbar ist und dass bei Detektion einer Beschädigung der mindestens eine Stördetektor (20) den ersten Schalter (45) so ansteuert, dass das Ausgangssignal (F1) des ersten Festwertspeichers (55) für die erste vorgegebene Zeit dem Aktuator (15) zugeführt wird.

11. Laufwerk (5) nach Anspruch 7, **dadurch gekennzeichnet, dass** mindestens ein zweiter Mittelwertbildner (75, 80, 85) vorgesehen ist, der vom Ausgangssignal (AE1, AE2, AEn) des mindestens einen Energie- oder Informationsspeichers (25, 30, 35) über eine zweite vorgegebene Zeit einen Mittelwert (M2, M3, Mn) bildet, dass durch den zweiten Schalter (60, 65, 70) entweder das Ausgangssignal (AE1, AE2, AEn) des mindestens einen Energie- oder Informationsspeichers (25, 30, 35) direkt oder ein Ausgangssignal (M2, M3, Mn) des zweiten Mittelwertbildners (75, 80, 85) der Regelung zuführbar ist und dass bei Detektion einer Beschädigung der mindestens eine Stördetektor (20) den zweiten Schalter (60, 65, 70) so ansteuert, dass das Ausgangssignal (M2, M3, Mn) des zweiten Mittelwertbildners (75, 80, 85) für die erste vorgegebene Zeit der Regelung zugeführt wird.

12. Laufwerk (5) nach Anspruch 7, **dadurch gekennzeichnet, dass** dass mindestens ein zweiter Festwertspeicher (90, 95,100) vorgesehen ist, der ein vordefiniertes Ausgangssignal (F2, F3, Fn) liefert, dass durch den zweiten Schalter (60, 65, 70) entweder das Ausgangssignal (AE1, AE2, AEn) des mindestens einen Energie- oder Informationsspeichers (25, 30, 35) direkt oder das Ausgangssignal (F2, F3, Fn) des zweiten Festwertspeichers (90, 95, 100) der Regelung zuführbar ist und dass bei Detektion einer Beschädigung der mindestens eine Stördetektor (20) den zweiten Schalter (60, 65, 70) so ansteuert, dass das Ausgangssignal (F2, F3, Fn) des zweiten Festwertspeichers (90, 95, 100) für die erste vorgegebene Zeit der Regelung zugeführt wird.

## Claims

1. Method for controlling the tracking of a scanning device (1), in particular of a read/write head, of a drive (5) for storage media (10), a measured position of the scanning device (1) with respect to a storage medium (10) introduced into the drive (5) being compared with a prescribed position, and at least one actuator (15) being driven on the basis of the comparison result in such a manner that the scanning device (1) is moved in the direction of the prescribed position, at least one disturbance detector (20) detecting damage to a surface (which is to be scanned) of the storage medium (10) that has been introduced, and, when such damage is detected, a manipulated variable of the at least one actuator (15) for adjusting the position of the scanning device (1) being kept at a prescribed value for a first prescribed amount of time, **characterized in that**, when the at least one disturbance detector (20) detects damage, a signal (AE1', AE2', AEn') which is derived, at least at times, from the output signal (AE1, AE2, AEn) from at least one energy or information store (25, 30, 35) which is used for control and belongs to a filter stage (105) is also kept at a prescribed value (M2, M3, Mn; F2, F3, Fn) for the first prescribed amount of time and is supplied to the control system.

2. Method according to Claim 1, **characterized in that** a drive signal (A) of the at least one actuator (15) is kept at a prescribed value (M1; F1) for the first prescribed amount of time when the at least one disturbance detector (20) detects damage.

3. Method according to Claim 2, **characterized in that** a mean value (M1) is formed over a second prescribed amount of time from a position error signal (P) from the control system, said position error signal resulting from a comparison of an actual position with a desired position of the scanning device (1), and **in that** the drive signal (A) is derived from the formed mean value (M1) for the first prescribed amount of time when the at least one disturbance detector (20) detects damage.

4. Method according to Claim 2, **characterized in that** the drive signal (A) is set to a predefined value (F1) for the first prescribed amount of time when the at least one disturbance detector (20) detects damage.

5. Method according to Claim 1, **characterized in that** a mean value (M2, M3, Mn) is formed over a second prescribed amount of time from the output signal (AE1, AE2, AEn) from the at least one energy or information store (25, 30, 35), and **in that** the signal (AE1', AE2', AEn') which is derived, at least at times, from the output signal (AE1, AE2, AEn) is derived from the formed mean value (M2, M3, Mn) for the first prescribed amount of time when the at least one disturbance detector (20) detects damage.

6. Method according to Claim 1, **characterized in that** the signal (AE1', AE2', AEn') which is derived, at least at times, from the output signal (AE1, AE2, AEn) from the at least one energy or information store (25, 30, 35) is set to a predefined value (F2, F3, Fn) for the first prescribed amount of time when the at least one disturbance detector (20) detects damage.

7. Drive (5) for storage media (10), said drive having a scanning device (1), in particular a read/write head, for scanning a storage medium (10) which has been inserted into the drive (5), having at least one position sensor (50) for measuring a position of the scanning device (1) with respect to the storage medium (10) introduced into the drive (5), having a comparison device (40) for comparing the measured position with a prescribed position, and having at least one actuator (15) which is driven by the comparison device (40) on the basis of the comparison result in such a manner that the scanning device (1) is moved in the direction of the prescribed position, and having at least one disturbance detector (20) for detecting damage to a surface (which is to be scanned) of the storage medium (10) that has been introduced, the disturbance detector (20), when such damage is detected, driving the at least one actuator (15) in such a manner that a manipulated variable of the at least one actuator (15) for adjusting the position of the scanning device (1) is kept at a prescribed value for a first prescribed amount of time, **characterized in that** provision is also made of at least one energy or information store (25, 30, 35) which is used for control and belongs to a filter stage (105), **in that** provision is made of at least one second controllable switch (60, 65, 70) for switching over a signal (AE1', AE2', AEn') which is derived, at least at times, from an output signal (AE1, AE2, AEn) from the at least one energy or information store (25, 30, 35), and **in that**, when damage is detected, the at least one disturbance detector (20) drives the second switch (60, 65, 70) in such a manner that the signal (AE1', AE2', AEn') which is derived, at least at times, from the output signal (AE1, AE2, AEn) from the at least one energy or information store (25, 30, 35) is switched to a prescribed value (M2, M3, Mn; F2, F3, Fn) for the first prescribed amount of time.

8. Drive (5) according to Claim 7, **characterized in that** provision is made of a first controllable switch (45) for switching over a drive signal (A) of the at least one actuator (15), and **in that**, when damage is detected, the at least one disturbance detector (20) drives the first switch (45) in such a manner that the drive signal (A) is switched to a prescribed value for the first prescribed amount of time.

9. Drive (5) according to Claim 8, **characterized in that** provision is made of a first averager (50) which forms a mean value (M1) over a second prescribed amount of time from a position error signal (P) of the control system, said position error signal resulting from a comparison of an actual position with a desired position of the scanning device (1), **in that** the first switch (45) can directly supply either the position error signal (P) or an output signal from the first averager (50) to the at least one actuator (15), and **in that**, when damage is detected, the at least one disturbance detector (20) drives the first switch (45) in such a manner that the output signal (M1) from the first averager (50) is supplied to the actuator (15) for the first prescribed amount of time.

10. Drive (5) according to Claim 8, **characterized in that** provision is made of a first read only memory (55) which provides a predefined output signal (F1), **in that** the first switch (45) can directly supply either the position error signal (P) or the output signal (F1) from the first read only memory (55) to the at least one actuator (15), and **in that**, when damage is detected, the at least one disturbance detector (20) drives the first switch (45) in such a manner that the output signal (F1) from the first read only memory (55) is supplied to the actuator (15) for the first prescribed amount of time.

11. Drive (5) according to Claim 7, **characterized in that** provision is made of at least one second averager (75, 80, 85) which forms a mean value (M2, M3, Mn) over a second prescribed amount of time from the output signal (AE1, AE2, AEn) from the at least one energy or information store (25, 30, 35), **in that** the second switch (60, 65, 70) can directly supply either the output signal (AE1, AE2, AEn) from the at least one energy or information store (25, 30, 35) or an output signal (M2, M3, Mn) from the second averager (75, 80, 85) to the control system, and **in that**, when damage is detected, the at least one disturbance detector (20) drives the second switch (60, 65, 70) in such a manner that the output signal (M2, M3, Mn) from the second averager (75, 80, 85) is supplied to the control system for the first prescribed amount of time.

12. Drive (5) according to Claim 7, **characterized in that** provision is made of at least one second read only memory (90, 95, 100) which provides a predefined output signal (F2, F3, Fn), **in that** the second switch (60, 65, 70) can directly supply either the output signal (AE1, AE2, AEn) from the at least one energy or information store (25, 30, 35) or the output signal (F2, F3, Fn) from the second read only memory (90, 95, 100) to the control system, and **in that**, when damage is detected, the at least one disturbance detector (20) drives the second switch (60, 65, 70) in such a manner that the output signal (F2, F3, Fn) from the second read only memory (90, 95, 100) is supplied to the control system for the first prescribed amount of time.

## Revendications

1. Procédé de régulation de la poursuite d'un dispositif de balayage (1), en particulier d'une tête d'écriture/lecture, d'un lecteur (5) de supports d'enregistrement (10), selon lequel
- on compare à une position prédéterminée une position mesurée du dispositif de balayage (1) par rapport à un support d'enregistrement (10) introduit dans le lecteur (5) et,
- en fonction du résultat de la comparaison, on commande au moins un actionneur (15) pour que
- le dispositif de balayage (1) se déplace en direction de la position prédéterminée, les détériorations d'une surface à balayer du support d'enregistrement introduit (10) étant détectées par au moins un détecteur d'anomalies (20) et
- lorsqu'une telle détérioration est détectée, une grandeur de réglage de l'actionneur (15) est maintenue pour le réglage de la position du dispositif de balayage (1) pendant un premier temps prédéterminé à une valeur prédéterminée,
**caractérisé en ce que**
lorsqu'une détérioration est détectée par le détecteur d'anomlaies (20), en outre un signal (AE1', AE2', AEn') dérivé au moins temporairement du signal de sortie (AE1, AE2, AEn) d'au moins une mémoire d'énergie ou d'information (25, 30, 35) d'un étage de filtre (105), utilisée pour la régulation, est maintenu pendant le premier temps prédéterminé à une valeur prédéterminée (M2, M3, Mn ; F2, F3, Fn) et affecté à la régulation.

2. Procédé selon la revendication 1,
**caractérisé en ce que**
lorsqu'une détérioration est détectée par le détecteur d'anomalies (20) un signal de commande (A) de l'actionneur (15) est maintenu pendant le premier temps prédéterminé à une valeur prédéterminée (M1 ; F1).

3. Procédé selon la revendication 2,
**caractérisé en ce qu'**
on forme une moyenne (M1) pendant un deuxième temps prédéterminé, à partir d'un signal d'erreur de position (P) de la régulation qui résulte d'une comparaison d'une position réelle avec une position de consigne du dispositif de balayage (1) et, lorsqu'une détérioration est détectée par le détecteur d'anomalies (20), on dérive de la moyenne formée (M1) le signal de commande (A) pendant le premier temps prédéterminé.

4. Procédé selon la revendication 2,
**caractérisé en ce que**
lorsqu'une détérioration est détectée par le détecteur d'anomalies (20), le signal de commande (A) est fixé pendant le premier temps prédéterminé à une valeur prédéfinie (F1).

5. Procédé selon la revendication 1,
**caractérisé en ce qu'**
on forme une moyenne (M2, M3, Mn) pendant un deuxième temps prédéterminé, à partir du signal de sortie (AE1, AE2, AEn) de la mémoire d'énergie ou d'information (25, 30, 35) et, lorsqu'une détérioration est détectée par le détecteur d'anomalies (20), le signal (AE1', AE2', AEn') dérivé au moins temporairement du signal de sortie (AE1, AE2, AEn) est dérivé de la moyenne formée (M2, M3, Mn) pendant le premier temps prédéterminé.

6. Procédé selon la revendication 1,
**caractérisé en ce que**
lorsqu'une détérioration est détectée par le détecteur d'anomalies (20) le signal (AE1', AE2', AEn') dérivé au moins temporairement du signal de sortie (AE1, AE2, AEn) de la mémoire d'énergie ou d'information (25, 30, 35) est fixé pendant le premier temps prédéterminé à une valeur prédéterminée (F2, F3, Fn).

7. Lecteur (5) de supports d'enregistrement (10) avec un dispositif de balayage (1), en particulier une tête d'écriture/de lecture, pour balayer un support d'enregistrement introduit dans le lecteur (5), avec au moins un détecteur de position (50) pour mesurer une position du dispositif de balayage (1) par rapport à un support d'enregistrement (10) introduit dans le lecteur (5), avec un dispositif de comparaison (40) pour comparer la position mesurée avec une position prédéterminée, et avec au moins un actionneur (15) commandé par le dispositif de comparaison (40) en fonction du résultat de la comparaison, pour déplacer le dispositif de balayage (1) en direction de la position prédéterminée, avec au moins un détecteur d'anomalies (20) pour détecter des détériorations sur une surface à balayer du support d'enregistrement introduit, le détecteur d'anomalies (20), lorsqu'une telle détérioration est détectée, commandant l'actionneur (15) pour régler la position du dispositif de balayage (1), par une grandeur de réglage de l'actionneur (15) pendant un premier temps prédéterminé à une valeur prédéterminée,
**caractérisé en ce qu'**
on prévoit également au moins une mémoire d'énergie ou d'information (25, 30, 35) d'un étage de filtre (105), utilisée pour la régulation, au moins un deuxième commutateur à commander (60, 65, 70) pour commuter un signal (AE1', AE2', AEn') dérivé au moins temporairement d'un signal de sortie (AE1, AE2, AEn) de la mémoire d'énergie ou d'information (25, 30, 35), et le détecteur d'anomalies (20), lorsqu'une détérioration est détectée, commande le deuxième commutateur (60, 65, 70) pour que le signal (AE1', AE2', AEn') dérivé au moins temporairement du signal de sortie (AE1, AE2, AEn) de la mémoire d'énergie ou d'information (25, 30, 35) soit commuté pendant le premier temps prédéterminé sur une valeur prédéterminée (M2, M3, Mn ; F2, F3, Fn).

8. Lecteur (5) selon la revendication 7,
**caractérisé en ce qu'**
on prévoit un premier commutateur à commander (45), pour commuter un signal de commande (A) de l'actionneur et le détecteur d'anomalies (20), lorsqu'une détérioration est détectée, commande le premier commutateur (45) pour que le signal de commande (A) soit commuté pendant le premier temps prédéterminé sur une valeur prédéterminée.

9. Lecteur (5) selon la revendication 8,
**caractérisé en ce qu'**
à partir d'un signal d'erreur de position (P) de la régulation qui résulte d'une comparaison d'une position réelle avec une position théorique du dispositif de balayage (1), un premier dispositif de formation de moyenne (50) forme une moyenne (M1) pendant un deuxième temps prédéterminé, le premier commutateur (45) transmet à l'actionneur (15) soit le signal d'erreur de position (P) directement soit un signal de sortie du premier dispositif de formation de moyenne (50) et, lorsqu'une détérioration est détectée, le détecteur d'anomalies (20) commande le premier commutateur (45) pour que le signal de sortie (M1) du premier dispositif de formation de moyenne (50) soit transmis à l'actionneur (15) pendant le premier temps prédéterminé.

10. Lecteur (5) selon la revendication 8,
**caractérisé en ce qu'**
une première mémoire de valeurs fixes (55) fournit un signal de sortie (F1) prédéfini, le premier commutateur (45) transmet à l'actionneur (15) soit le signal d'erreur de position (P) directement soit le signal de sortie (F1) de la première mémoire de valeurs fixes (55) et, lorsqu'une détérioration est détectée, le détecteur d'anomalies (20) commande le premier commutateur (45) pour que le signal de sortie (M1) de la première mémoire de valeurs fixes (55) soit transmis à l'actionneur (15) pendant le premier temps prédéterminé.

11. Lecteur (5) selon la revendication 7,
**caractérisé en ce qu'**
à partir du signal de sortie (AE1, AE2, AEn) de la mémoire d'énergie ou d'information (25, 30, 35), au moins un deuxième dispositif de formation de moyenne (75, 80, 85) forme une moyenne (M2, M3, Mn) pendant un deuxième temps prédéterminé, le deuxième commutateur (60, 65, 70) transmet à la régulation soit le signal de sortie (AE1, AE2, AEn) de la mémoire d'énergie ou d'information (25, 30, 35) directement soit un signal de sortie (M2, M3, Mn) du deuxième dispositif de formation de moyenne (75, 80, 85) et, lorsqu'une détérioration est détectée, le détecteur d'anomalies (20) commande le deuxième commutateur (60, 65, 70) pour que le signal de sortie (M2, M3, Mn) du deuxième dispositif de formation de moyenne (75, 80, 85) soit transmis à la régulation pendant le premier temps prédéterminé.

12. Lecteur (5) selon la revendication 7,
**caractérisé en ce qu'**
au moins une deuxième mémoire de valeurs fixes (90, 95, 100) fournit un signal de sortie (F2, F3, Fn) prédéfini, le deuxième commutateur (60, 65, 70) transmet à la régulation soit le signal de sortie (AE1, AE2, AEn) de la mémoire d'énergie ou d'information (25, 30, 35) directement soit le signal de sortie (F2, F3, Fn) de la deuxième mémoire de valeurs fixes (90, 95, 100) et, lorsqu'une détérioration est détectée, le détecteur d'anomalies (20) commande le deuxième commutateur (60, 65, 70) pour que le signal de sortie (F2, F3, Fn) de la deuxième mémoire de valeurs fixes (90, 95, 100) soit transmis à la régulation pendant le premier temps prédéterminé.
